Europäisches Patentamt

European Patent Office

Office européen des brevets

(19)

(11) Veröffentlichungsnummer: **0 116 959**
A2

## (12) EUROPÄISCHE PATENTANMELDUNG

(21) Anmeldenummer: 84101602.5

(22) Anmeldetag: 16.02.84

(51) Int. Cl.³: **H 02 K 37/00**
H 02 K 7/02

(30) Priorität: 22.02.83 DE 3306013

(43) Veröffentlichungstag der Anmeldung:
29.08.84 Patentblatt 84/35

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Oehler, Siegfried
Sindlinger Strasse 15
D-6238 Hofheim am Taunus(DE)

(54) Anordnung zum Dämpfen von Resonanzschwingungen an Schrittmotoren.

(57) Bei Schrittmotoren treten während der Anlaufphase Resonanzschwingungen auf. Zwecks Dämpfung der Resonanzschwingungen wird auf der Welle (6) des Schrittmotors (1) eine Schwungmasse (2) freilaufend und eine Bremsvorrichtung, z.B. zwei Scheiben (3, 4) zum Hemmen der Schwungmasse angeordnet.

EP 0 116 959 A2

Anordnung zum Dämpfen von Resonanzschwingungen an
Schrittmotoren

───────────────────────────────────────────────

Schrittmotore sind impulsgesteuerte Motore, deren
Drehzahl durch die Impulsfrequenz bestimmt wird. Nachteilig bei Schrittmotoren ist, daß sie bis zum Erreichen
der gewünschten Drehzahl ihre Resonanzdrehzahl durchlaufen, wodurch sie in Schwingungen geraten. Dabei kann
die Amplitude der Schwingungen so groß werden,
daß die Schrittmotoren zum Stillstand kommen.

Es ist zwar bekannt, die Resonanzdrehzahl durch Anbringen von zusätzlichen Schwungmassen so zu ändern,
daß sie außerhalb des gewünschten Drehzahlbereiches
zu liegen kommt. Nachteilig ist jedoch, daß die Schwungmasse eines jeden Antriebelementes an die geforderte
Beschleunigung und Geschwindigkeit angepaßt werden muß.
Das hat zur Folge, daß bestimmte Endgeschwindigkeiten
in den für den Einsatzzweck erforderlichen Zeiten nicht
mehr erreicht werden können, was eine erhebliche Einschränkung des Betriebes bedeutet.

Es stellte sich daher die Aufgabe, eine Anordnung zum
Dämpfen von Resonanzschwingungen an Schrittmotoren zu
schaffen, mit der die vorerwähnten Nachteile überwunden
werden.

Die Erfindung löst die Aufgabe dadurch, daß auf der
Welle des Schrittmotors eine Schwungmasse freilaufend
und eine Bremsvorrichtung so angeordnet sind, daß die
Schwungmasse durch die Bremsvorrichtung in ihrer Bewegung gehemmt wird.

Die Bremsvorrichtung kann aus zwei Scheiben bestehen,
zwischen denen die Schwungmasse angeordnet ist, wobei eine Scheibe fest mit der Welle verbunden und die zweite Scheibe auf der Welle axial verschiebbar angeordnet ist und mittels einem Kraftelement gegen die Schwungmasse gepreßt wird. Die zweite Scheibe kann mittels einer Schraubenfeder gegen die Schwungmasse gepreßt werden. Die Bremsvorrichtung kann auch aus einer ferromagnetischen Scheibe bestehen, der gegenüber als Schwungmasse eine Scheibe aus magnetischem Material angeordnet ist.

Die Schwungmasse sollte höchstens so groß sein, wie die Ankermasse des Schrittmotors.

Im folgenden wird die Erfindung anhand von einer lediglich einen Ausführungsweg darstellenden Zeichnung näher erläutert.

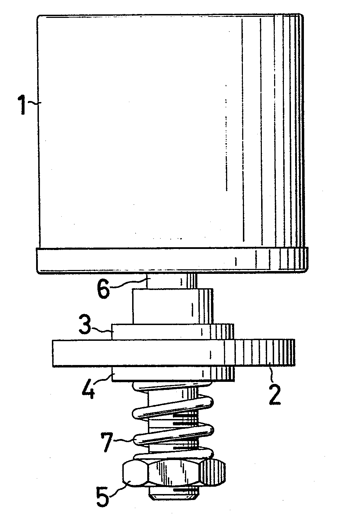

Die Figur zeigt einen Schrittmotor (1), auf dessen Welle (6) eine Schwungmasse (2) freilaufend angeordnet ist. Die Schwungmasse (2) befindet sich zwischen zwei Scheiben (3) und (4) einer Bremsvorrichtung. Die Scheibe (3) ist fest mit der Welle (6) verbunden, während die Scheibe (4) auf der Welle (6) axial verschiebbar angeordnet ist und mit einem Kraftelement (7), z.B. einer Feder gegen die Schwungmasse (2) gepreßt wird. Der Anpreßdruck kann mittels Mutter (5) eingestellt werden, die gleichzeitig Widerlager für die Feder ist.

PATENTANSPRÜCHE:

1. Anordnung zum Dämpfen von Resonanzschwingungen an Schrittmotoren, dadurch gekennzeichnet, daß auf der Welle (6) des Schrittmotors (1) eine Schwungmasse (2) freilaufend und eine Bremsvorrichtung so angeordnet sind, daß die Schwungmasse (2) durch die Bremsvorrichtung in ihrer Bewegung gehemmt wird.

2. Anordnung nach Anspruch 1, dadurch gekennzeichnet, daß die Bremsvorrichtung aus zwei Scheiben (3), (4) besteht, zwischen denen die Schwungmasse (2) angeordnet ist, eine Scheibe (3) fest mit der Welle (2) verbunden und die zweite Scheibe (4) auf der Welle axial verschiebbar angeordnet ist und mittels einem Kraftelement (7) gegen die Schwungmasse (2) gepreßt wird.

3. Anordnung nach Anspruch 2, dadurch gekennzeichnet, daß die zweite Scheibe (4) mittels einer Schraubenfeder gegen die Schwungmasse (2) gepreßt wird.

4. Anordnung nach Anspruch 2, dadurch gekennzeichnet, daß die Bremsvorrichtung aus einer ferromagnetischen Scheibe besteht, der gegenüber als Schwungmasse (2) eine Scheibe aus magnetischem Material angeordnet ist.

0116959